(19) Europäisches Patentamt
European Patent Office
Office européen des brevets

(11) **EP 3 548 860 B1**

(12) **EUROPÄISCHE PATENTSCHRIFT**

(45) Veröffentlichungstag und Bekanntmachung des Hinweises auf die Patenterteilung:
**03.02.2021 Patentblatt 2021/05**

(21) Anmeldenummer: **17808485.1**

(22) Anmeldetag: **05.12.2017**

(51) Int Cl.:
**G01M 13/025** *(2019.01)*  **G01M 17/007** *(2006.01)*

(86) Internationale Anmeldenummer:
**PCT/EP2017/081454**

(87) Internationale Veröffentlichungsnummer:
**WO 2018/104270 (14.06.2018 Gazette 2018/24)**

(54) **VERFAHREN ZUR STEUERUNG EINER BELASTUNGSMASCHINE WÄHREND EINES PRÜFLAUFS MIT EINEM ANTRIEBSSTRANG UND PRÜFSTAND**

METHOD FOR CONTROLLING AN ABSORBING DYNAMOMETER DURING A POWER TRAIN TEST AND TEST BENCH

PROCÉDÉ DE CONTRÔLE D'UN DYNAMOMÈTRE D'ABSORPTION PENDANT UNE ÉPREUVE D'UN ARBRE DE TRANSMISSION ET BANC D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2016 AT 511022016**

(43) Veröffentlichungstag der Anmeldung:
**09.10.2019 Patentblatt 2019/41**

(73) Patentinhaber: **AVL List GmbH**
**8020 Graz (AT)**

(72) Erfinder:
• **PFEIFFER, Klaus**
**67575 Eich (DE)**
• **SCHMIDT, Martin**
**63225 Langen (DE)**

(74) Vertreter: **Patentanwälte Pinter & Weiss OG**
**Prinz-Eugen-Straße 70**
**1040 Wien (AT)**

(56) Entgegenhaltungen:
EP-A2- 1 037 030    EP-A2- 2 161 560
JP-A- 2009 276 304    US-A1- 2015 219 529

• **RAHUL AHLAWAT ET AL: "Engine torque pulse and wheel slip emulation for transmission-in-the-loop experiments", ADVANCED INTELLIGENT MECHATRONICS (AIM), 2010 IEEE/ASME INTERNATIONAL CONFERENCE ON, IEEE, PISCATAWAY, NJ, USA, 6. Juli 2010 (2010-07-06), Seiten 688-695, XP031855911, ISBN: 978-1-4244-8031-9**

**Beschreibung**

Die gegenständliche Erfindung betrifft ein Verfahren zum Durchführen eines Prüflaufs auf einem Antriebsstrangprüfstand auf dem ein Antriebsstrang mit zumindest einer Seitenwelle angeordnet wird und diese Seitenwelle mit einer Belastungsmaschine verbunden wird und die Drehzahl der Seitenwelle in einer Regelungseinheit geregelt wird, wobei in einem Simulationsmodell eine Längskraft eines mit dem Simulationsmodell simulierten Reifen eines Fahrzeugrades und eine einzustellende Soll-Drehzahl der Belastungsmaschine berechnet wird und die Soll-Drehzahl der Regelungseinheit als Sollwert der Drehzahlregelung der Belastungsmaschine übergeben wird, wobei in der Regelungseinheit ein Kompensationsdrehmoment berechnet wird und die Regelungseinheit mit einem Drehzahlregler aus der Soll-Drehzahl ein Drehmoment berechnet und ein mit der Belastungsmaschine einzustellendes Drehmoment als Summe aus dem Kompensationsdrehmoment und des vom Drehzahlregler berechneten Drehmomentes berechnet wird und von der Belastungsmaschine eingestellt wird. Gleichsam betrifft die Erfindung einen zugehörigen Antriebsstrangprüfstand.

Zur Entwicklung eines Antriebsstranges muss dieser während des Entwicklungsprozesses oftmals geprüft werden, also gemäß eines Prüflaufs bestimmten Belastungen unterworfen werden, um die Reaktion des Antriebsstranges zu prüfen. Mit dem Ergebnis der Prüfungen können dann entsprechende Schritte gesetzt werden, um den Antriebsstrang weiterzuentwickeln oder zu verbessern. Zur Prüfung eines Antriebsstranges gibt es verschiedene bekannte Ansätze.

Der Antriebsstrang kann beispielsweise in ein reales Fahrzeug eingebaut werden und es können mit dem Fahrzeug Testfahrten, auf einer realen Straße oder auf einem Testgelände, durchgeführt werden. Während der Testfahrten können Messungen am Fahrzeug oder am Antriebsstrang gemacht werden und nach der Testfahrt ausgewertet werden. Dieses Vorgehen ist natürlich sehr aufwendig. Zudem ist eine Testfahrt kaum reproduzierbar, da ein Testfahrer nicht in der Lage ist, eine Testfahrt mehrmals exakt gleich auszuführen. Auf dem Testgelände könnten zwar Fahrroboter und Schaltroboter (falls ein Schaltgetriebe vorhanden ist) verwendet werden, um die Testfahrt reproduzierbarer zu machen, was aber den Aufwand aber nochmals deutlich erhöht. Solche Testfahrten sind daher eher nachteilig und werden heutzutage, wenn überhaupt, nur in einem sehr späten Entwicklungsstadium eines Antriebsstranges oder eines Fahrzeugs eingesetzt. Für ein frühes Entwicklungsstadium, wo oftmalige Änderungen und Tests notwendig, sind, ist das aber kaum geeignet.

Anstelle einer realen Testfahrt auf der Straße könnte auch ein Rollenprüfstand eingesetzt, bei dem das Fahrzeug auf dem Rollenprüfstand auf Rollen des Prüfstandes angeordnet werden. Mit solchen Rollenprüfständen sind aufgrund der hohen Trägheiten der Rollen aber kaum dynamische Prüfungen (im Sinne einer schnellen bzw. transienten Änderung der Stellgrößen, wie Drehzahl und Drehmoment) möglich. Auch Rollenprüfstände eignen sich daher nicht, oder nur sehr beschränkt, für die Prüfung von Antriebssträngen, zumindest nicht für sehr dynamische Prüfungen.

Um diese Probleme zu beheben sind auch schon Antriebsstrangprüfstände bekannt geworden, wo zumindest an den angetriebenen Seitenwellen des Antriebsstrang eine Belastungsmaschine (beispielsweise ein Elektromotor) angeordnet wird, der zur Belastung des Antriebsstranges vorgegebene Drehmomente oder Drehzahlen in den Antriebsstrang aufprägt und damit eine reale Fahrt eines Fahrzeugs mit dem Antriebsstrang simuliert. Die über die Belastungsmaschine(n) einzustellende Drehzahl / Drehmoment wird dabei in einem Simulationsmodell berechnet. Das Simulationsmodell umfasst dabei oftmals ein Fahrzeugmodell, ein (oder mehrere) Radmodell, ein Straßenmodell, ein Fahrermodell, und auch weitere Modelle, die zusammenarbeiten und gemeinsam die Bewegung des Fahrzeugs simulieren.

Die EP 1 037 030 A2 beschreibt beispielsweise einen Antriebsstrangprüfstand mit einem Simulationsmodell zur Simulation der Bewegung eines Fahrzeugs. Für die Steuerung des Prüflaufs wird ein Reifenmodell in Kombination mit einem Fahrzeugmodell verwendet, das einen Sollwert für das Drehmoment berechnet. Dazu wird die Drehzahl der Seitenwelle gemessen und dem Simulationsmodell zur Verfügung gestellt. Der berechnet Sollwert für das Drehmoment für direkt der Belastungsmaschine zur Umsetzung zur Verfügung gestellt. Die Belastungsmaschine ist somit in einem offenen Regelkreis (open-loop) drehmomentengesteuert. Der Nachteil bei diesem Ansatz ist, dass für realitätsnahe Prüfläufe das Trägheitsmoment möglichst genau dem Trägheitsmoment des echten Rades, das normalerweise am Antriebsstrang angeordnet ist, entsprechen muss. Da das Trägheitsmoment eines Rades in der Regel gering ist, stellt das hohe Anforderungen an die Belastungsmaschinen. Diese müssen daher im Allgemeinen als elektrische Synchronmaschinen ausgeführt sein, mit ihren bekannten Nachteilen bei Kosten und Betriebssicherheit. Weiterhin ist ein aufwendiger Abgleich des Drehmomentes im Umrichter der Belastungsmaschine erforderlich.

Darüber hinaus hat eine open-loop Steuerung natürlich keine Möglichkeit einer Ausregelung eines Regelfehlers wie im Falle eines geschlossenen Regelkreises (closed-loop) und bietet auch keine Störungsunterdrückung. Somit haben auch, an sich nicht vermeidbare, fertigungsbedingte oder betriebsbedingte Abweichungen der einzelnen Belastungsmaschinen schon einen unmittelbaren (negativen) Einfluss auf die Steuerung des Antriebsstrangprüfstandes.

Ein solcher Antriebsstrangprüfstand geht auch aus der DE 38 01 647 C2 für einen Allrad-Antriebsstrang hervor. Dabei werden die Drehzahlen und die Drehmomente der Seitenwellen am Antriebsstrangprüfstand gemessen und daraus im Simulationsmodell Solldrehzahlen für die drehzahlgeregelten Belastungsmaschinen an den Seitenwellen berechnet. Für das Simulationsmodell wird allerdings ein etwas anderer Ansatz gewählt, da anstelle eines Reifenmodells ein Radmodell (das auch die Simulation des Reifens umfasst) zum Einsatz kommt. Darin ist auch das Zusammenarbeiten der verschiedenen Modelle genau beschrieben. Für eine dynamische Prüfung ist insbesondere die Berücksichtigung des Reifenschlupfes von Bedeutung, wofür ein Reifenmodell benötigt wird. Auch das beschreibt die DE 38 01 647 C2.

Auch die AT 508 031 B1 zeigt einen Antriebsstrangprüfstand mit Fahrzeugmodell und Radmodellen und Drehzahlregelung der Belastungsmaschinen am Prüfstand.

Der Nachteil der DE 38 01 647 C2 und der AT 508 031 B1 liegt darin, dass die Drehzahlregelung eine Verzögerung und Dämpfung bedingt, womit die herrschende Drehzahl an der Seitenwelle der im Simulationsmodell simulierten Drehzahl zeitlich immer nachhinkt. Damit entspricht der aktuelle Zustand am Antriebsstrang am Antriebsstrangprüfstand nicht dem gewünschten, simulierten Zustand, was die Prüfung des Antriebsstranges negativ beeinflusst. Um dynamische Zustandsänderungen, die bei Prüfungen eines Antriebsstranges immer zu erwarten sind, zu ermöglichen, muss der Drehzahlregler eine hohe Verstärkung aufweisen, die negative Auswirkungen auf die Stabilität der Regelung hat. Im schlimmsten Fall kann die Drehzahlregelung instabil werden, was den Antriebsstrangprüfstand beschädigen oder gar zerstören könnte, zumindest aber den Prüflauf unterbricht. Der Regler muss daher optimiert werden, um den Anforderungen zu genügen, was ein aufwendigeres Reglerdesign oder Reglertuning notwendig macht.

Um dieses Problem zu beheben wurde in Bauer, R., "Neues Regelkonzept für die dynamische Antriebsstrangprüfung", 17. Steirisches Seminar über Regelungstechnik und Prozessautomatisierung vom 5. - 8.9.2011, Tagungsband S.104-116 vorgeschlagen, das Radmodell, welches das Reifenmodell beinhaltet, in der Simulation zu adaptieren. Das bedarf allerdings eines Eingriffs in die Simulationsumgebung und einen Austausch oder eine Adaptierung des Radmodells. Solche Eingriffe sind aber oftmals vom Betreiber des Antriebsstrangprüfstandes nicht erwünscht, da in der Regel bekannte Standardmodelle für das Rad und den Reifen verwendet werden, und daher nicht möglich. Oftmals ist die Simulationsumgebung mit den Simulationsmodellen bereits in einer frühen Entwicklungsphase vor der Nutzung am Prüfstand vorhanden und soll unverändert am Prüfstand genutzt werden. Der Prüfstand stellt lediglich eine Schnittstelle zur Verfügung, an der eine Solldrehzahl ausgegeben wird und an die am Antriebsstrangprüfstand gemessene Größen an das Simulationsmodell übergeben werden. Welches Radmodell in der Simulationsumgebung verwendet wird ist daher oftmals nicht einmal bekannt, womit eine Änderung des Radmodells in der Praxis oftmals auch kaum möglich ist.

Die US 2015/219529 A1 beschreibt einen Antriebsstrangprüfstand gemäß dem Oberbegriff der unabhängigen Ansprüche. Das Kompensationsdrehmoment wird darin berechnet, um einen auftretenden Reifenschlupf zu berücksichtigen. Daher wird das Kompensationsdrehmoment aus der Differenz zwischen dem wirkenden Wellenmoment und dem simulierten Vortriebsmoment am Reifen berechnet. Das Problem der auftretenden Totzeiten und eingebrachten Dämpfung zufolge der Berechnung der Soll-Drehzahlen in einem Simulationsmodell und die damit einhergehenden Stabilitätsprobleme der Drehzahlregelung kann damit nicht beseitigt werden.

Es ist daher eine Aufgabe der gegenständlichen Erfindung die Probleme des Standes der Technik zu beheben.

Diese Aufgabe wird dadurch gelöst, dass das in der Simulationsmodell berechnete, von der Längskraft hervorgerufene Drehmoment der Regelungseinheit zusätzlich übergeben wird, und daraus in der Regelungseinheit ein Kompensationsdrehmoment als Funktion des von der Längskraft hervorgerufenen Drehmoments und einer Abweichung zwischen einem Trägheitsmoment der Belastungsmaschine und einem Trägheitsmoment des simulierten Fahrzeugrades berechnet wird. Das Kompensationsdrehmoment wird einfach berechnet, indem als Abweichung ein Quotient aus dem Trägheitsmoment der Belastungsmaschine und dem Trägheitsmoment des simulierten Fahrzeugrades oder eine Differenz aus dem Trägheitsmoment des simulierten Fahrzeugrades und dem Trägheitsmoment der Belastungsmaschine verwendet wird. Durch das Kompensationsdrehmoment kann erreicht werden, dass die Belastungsmaschine das simulierte Fahrzeugrad am Antriebsstrangprüfstand trotz unterschiedlicher Trägheitsmomente gut nachbildet. Das Kompensationsdrehmoment fungiert dabei, als Führungsgröße, womit der Drehzahlregler nur mehr allfällige, am Antriebsstrangprüfstand auftretende Abweichungen ausregeln muss. Die Anforderungen an den Drehzahlregler, beispielsweise an die Verstärkung, können damit ebenfalls reduziert werden und gleichzeitig kann damit die Dynamik des Drehzahlreglers (im Sinne einer Änderungsrate der Stellgröße) und die Geschwindigkeit verbessert werden. Ebenfalls kann damit die Stabilität des Drehzahlreglers erhöht werden.

Vorteilhafterweise umfasst das Simulationsmodell ein Radmodell mit einem Reifenmodell und ein Fahrzeugmodell. Damit können Standardmodelle verwendet werden, was die Simulation erleichtert.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 ein Ausführungsbeispiel eines Antriebsstrangprüfstandes mit einem Antriebsstrang als Prüfling,
Fig.2 eine vorteilhafte Modellstruktur des Simulationsmodells,

Fig.3 ein beispielhaftes Reifenkoordinatensystem,

Fig.4 eine herkömmliche Drehzahlregelung einer Belastungsmaschine am Antriebsstrangprüfstand,

Fig.5 eine erfindungsgemäße Drehzahlregelung einer Belastungsmaschine am Antriebsstrangprüfstand und

Fig.6a die dynamischen Zustandsgrößen an einem Fahrzeugrad und

Fig.6b die dynamischen Zustandsgrößen an der Belastungsmaschine.

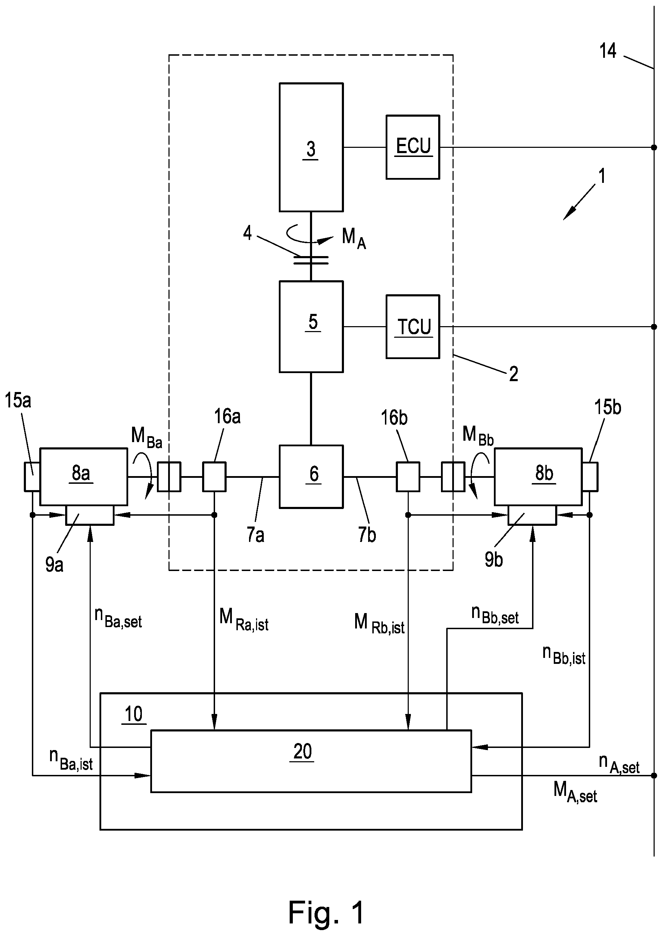

In Fig.1 ist schematisch ein Antriebsstrangprüfstand 1 für einen Antriebsstrang 2 dargestellt. Die notwendigen, bekannten Prüfstandsaufbauten zur Beförderung, Anordnung, Lagerung und Fixierung des Antriebsstranges 2 und der anderen Komponenten am Antriebsstrangprüfstand 1 sind aus Gründen der Übersichtlichkeit nicht dargestellt. Der Antriebsstrang 2 umfasst im gezeigten Ausführungsbeispiel ein Antriebsaggregat 3, beispielsweise einen Verbrennungsmotor oder einen Elektromotor oder eine Kombination daraus, das mittels einer Antriebswelle über eine Kupplung 4 mit einem Getriebe 5 verbunden ist. Das Getriebe 5 ist mit einem Differenzial 6 verbunden, über das wiederum zwei Seitenwellen 7a, 7b des Antriebsstranges 2 angetrieben werden. An den angetriebenen Seitenwellen 7a, 7b des Antriebsstranges 2 sind Belastungsmaschinen 8a, 8b, beispielsweise Elektromotoren, angeordnet. Die Belastungsmaschinen 8a, 8b sind in bekannter Weise angeordnet und mit den Seitenwellen 7a, 7b drehfest verbunden, um ein Drehmoment übertragen zu können. Beispielsweise sind die Belastungsmaschinen 8a, 8b am Radflansch der Seitenwelle 7a, 7b angeflanscht. Selbstverständlich könnte der Antriebsstrang 2 in gleicher Weise auch als Allrad-Antriebsstrang ausgeführt sein. In diesem Fall könnten in analoger Weise an allen angetriebenen Seitenwellen Belastungsmaschinen angeordnet sein. Ebenso sind auch andere Antriebskonzepte und Ausführungen des Antriebsstranges 2 denkbar, wie beispielsweise eine rein elektrisch angetriebene Achse (auch in Kombination mit einer anders angetriebenen Achse), oder die Verwendung von Radnabenmotoren. Genauso spielt es keine Rolle, wie viele Achsen oder wie viele angetrieben Achsen vorhanden sind und wie viele Räder auf einer Achse angeordnet sind.

Der Antriebsstrang 2 kann auch Steuereinheiten, wie beispielsweise eine Motorsteuereinheit ECU oder eine Getriebesteuereinheit TCU, umfassen, um die Komponenten des Antriebsstranges 2, insbesondere des Antriebsaggregats 3, oder gegebenenfalls der Antriebsaggregate, zu steuern.

Die konkrete Ausführung des Antriebsstranges 2 ist für die Erfindung unerheblich. Entscheidend ist lediglich, dass zumindest eine Belastungsmaschine 8a, 8b mit zumindest einer Seitenwelle 7a, 7b verbunden werden kann. Das ist vorzugsweise eine angetriebene Seitenwelle 7a, 7b, kann aber auch eine nicht angetriebene Seitenwelle sein. Die Anordnung einer nicht angetriebenen Seitenwelle kann beispielsweise Sinn machen, wenn man auch eine Bremse an einer Seitenwelle oder das Bremsverhalten simulieren möchte.

Zusätzlich ist am Prüfstand 1 eine Prüfstandautomatisierungseinheit 10 vorgesehen, die den durchzuführenden Prüflauf am Prüfstand 1 steuert. Die Prüfstandautomatisierungseinheit 10 ist beispielsweise als Computer, oder als Verbund zusammenarbeitender Computer, mit benötigter Software ausgeführt. Die Prüfstandautomatisierungseinheit 10 steuert insbesondere die Belastungsmaschinen 8a, 8b, aber auch Komponenten des Antriebsstranges 2, insbesondere das Antriebsaggregat 3 oder das Getriebe 5. Das kann auch über die Steuereinheiten ECU, TCU erfolgen, beispielsweise indem eine Fahrpedalstellung von der Prüfstandautomatisierungseinheit 10 an die Motorsteuereinheit ECU übertragen wird. Die Verbindung zwischen der Prüfstandautomatisierungseinheit 10 und den Komponenten des Antriebsstranges 2 oder des Antriebsstrangprüfstandes 1 kann auch über einen Datenbus 14 z.B. einem herkömmlichen Fahrzeugbus, erfolgen, wie in Fig.1 angedeutet. Die Art der Steuerung der Komponenten des Antriebsstranges 2 ist für die Erfindung jedoch unerheblich.

In der Prüfstandautomatisierungseinheit 10 ist ein Simulationsmodell 20 implementiert, in Form von Simulationshardware und/oder Simulationssoftware, das die Bewegung eines virtuellen (d.h. simulierten) Fahrzeugs mit dem Antriebsstrang 2 durch eine virtuelle (d.h simulierten) Testumgebung entlang einer virtuellen Fahrtstrecke simuliert. Durch die virtuelle Testumgebung ist zumindest die virtuelle Fahrtstrecke (Kurven, Steigungen, Straßenneigungen, Straßenbelag) festgelegt. Dazu kann die Fahrtstrecke vorab definiert sein. Oftmals werden mit realen Fahrzeugen reale Strecken abgefahren und dabei gewisse Parameter (z.B. Kurven, Steigungen, Straßenneigungen, Straßenbelag (Reifenhaftung), Fahrzeuggeschwindigkeit, usw.) gemessen. Aus einer derartigen realen Fahrt kann dann eine virtuelle Fahrtstrecke erzeugt werden. Ebenso kann aus der realen Fahrt ein Fahrprofil gewonnen werden, also beispielsweise die Fahrzeuggeschwindigkeit oder eine Schalthandlung an bestimmten Stellen der Fahrtstrecke oder eine Geschwindigkeitsänderung an gewissen Stellen. Das Fahrprofil wird in der virtuellen Testumgebung von einem virtuellen Fahrer umgesetzt, hierfür können auch verschiedene Fahrerprofile definiert sein, beispielsweise ein konservativer oder ein aggressiver Fahrer, die beispielsweise eine gewünschte Geschwindigkeitsänderung anders umsetzen oder die anders durch eine Kurve fahren. Fahrtstrecke und/oder Fahrprofil können aber auch vollkommen frei von einem Benutzer definiert werden, beispielsweise in einem geeigneten Editor. Das Fahrprofil kann aber, zumindest teilweise, auch erst am Prüfstand während des Prüflaufs erzeugt werden, in dem am Prüfstand eine Schnittstelle (z.B. Lenkrad, Gaspedal, Kupplung, Bremspedal) zur Verfügung gestellt wird, über die ein echter Benutzer das virtuelle Fahrzeug in der virtuellen Testumgebung steuert, beispielsweise lenkt, Gas gibt, bremst, schaltet, usw. Die Fahrtstrecke kann aber auch durch Ereignisse ergänzt werden, wie beispielsweise Verkehrszeichen, Verkehr entlang der Fahrtstrecke, Wasserpfütze oder Eisplatte auf der Fahrbahn, usw.

Wie der Prüflauf durch die Simulation des virtuellen Fahrzeugs konkret aussieht ist für die Erfindung aber unerheblich. Wichtig ist hierbei lediglich, dass eine Bewegung eines virtuellen Fahrzeugs, insbesondere die Statik, die Dynamik, also Geschwindigkeiten und Beschleunigungen im Raum, und die Interaktion eines Reifens des Fahrzeugs mit der Fahrbahn bei dieser Bewegung simuliert werden. Das Simulationsmodell 20 liefert dabei in vorgegebenen Zeitschritten der Simulation, beispielsweise mit einer Frequenz von 10kHz, Sollwerte für das Antriebsaggregat 3, beispielsweise eine Solldrehzahl $n_{A,Set}$, ein Solldrehmoment $M_{A,Set}$, einen elektrischen Sollstrom oder eine elektrische Sollspannung, die vom Antriebsaggregat 3 eingestellt werden. Ebenso können Sollwerte für andere Komponenten des Antriebsstranges 2 ermittelt und übermittelt werden, beispielsweise ein Schaltbefehl für das Getriebe 5. Gleichzeitig liefert das Simulationsmodell 20 in den vorgegebenen Zeitschritten der Simulation Sollwerte für die eingesetzten Belastungsmaschinen 8a, 8b, vorzugsweise eine Solldrehzahl $n_{Ba,set}$, $n_{Bb,set}$. Auf diese Weise "erlebt" der Antriebsstrang 2 am Antriebsstrangprüfstand 1 im Wesentlichen dieselben Zustände, die das simulierte Fahrzeug bei einer Fahrt entlang der simulierten Teststrecke erfahren würde.

Die Belastungsmaschinen 8a, 8b werden in bekannter Weise jeweils von einer zugeordneten Regelungseinheit 9a, 9b geregelt. Eine Regelungseinheit 9a, 9b erhält hierfür den Sollwert für die zugeordnete Belastungsmaschine 8a, 8b, erfindungsgemäß eine Soll-Drehzahl $n_{Ba,set}$, $n_{Bb,set}$, und regelt diesen mittels des implementierten Reglers, beispielsweise ein bekannter PI- oder ein PID-Regler. Die Sollwerte für die einzelnen Belastungsmaschinen 8a, 8b müssen aber natürlich nicht gleich sein.

Zur Berechnung der Sollwerte und auch zur Regelung der Belastungsmaschinen 8a, 8b durch die Regelungseinheiten 9a, 9b werden am Antriebsstrangprüfstand 1 auch aktuelle Werte des Antriebsstranges 2 gemessen, beispielsweise eine Ist-Drehzahl $n_{Ba,ist}$, $n_{Bb,ist}$ einer Belastungsmaschinen 8a, 8b mit einer Drehzahlmesseinheit 15a, 15b und/oder ein Ist-Drehmoment $M_{Ra,ist}$, $M_{Rb,ist}$ einer Seitenwelle 7a, 7b mit einer Drehmomentenmesseinheit 16a, 16b, wie in Fig.1 angedeutet. Anstatt diese Größen direkt zu messen, könnten diese auch mittels eines Beobachters aus anderen Messgrößen des Antriebsstranges 2 berechnet werden. Ebenso könnten diese aus einem Modell des Antriebsstranges 2 berechnet werden. Ebenso könnten auch noch andere Größen gemessen, berechnet oder geschätzt werden, wie beispielsweise eine Wellenmoment $M_{Ba}$, $M_{Bb}$ der Belastungsmaschine 8a, 8b.

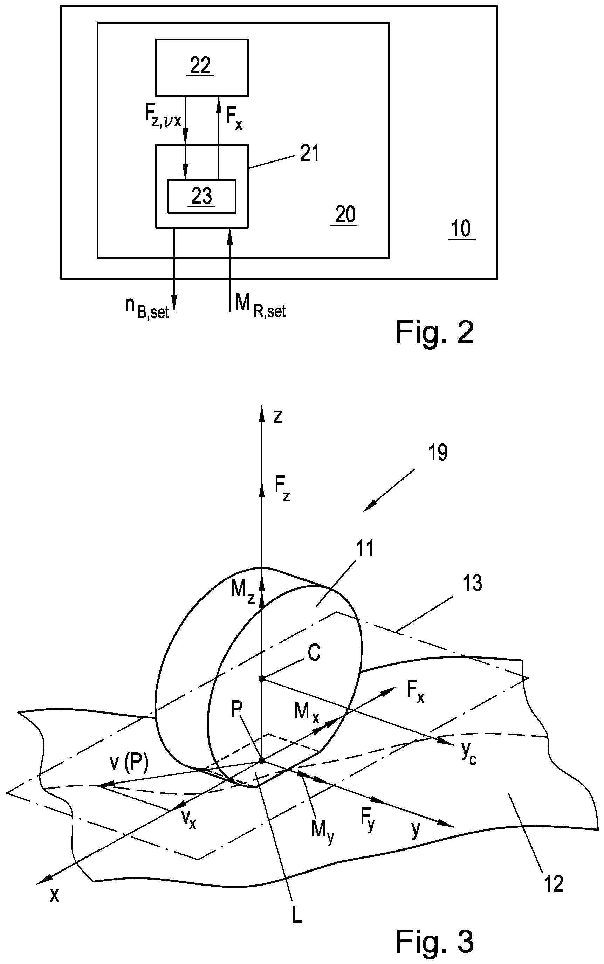

Zur Umsetzung der Simulation der Bewegung des virtuellen Fahrzeugs ist im Simulationsmodell 20 zumindest ein Fahrzeugmodell 22, das die Bewegung des Fahrzeugs entlang der Fahrtstrecke simuliert, und ein Radmodell 21 mit einem integrierten Reifenmodell 23 erforderlich, wie in Fig.2 dargestellt. Das Radmodell 21 mit dem Reifenmodell 23 simuliert dabei die Interaktion des Rades / Reifens mit der Umgebung, also konkret mit der Straße der Teststrecke. Dabei wird im Reifenmodell 23 in der Regel die Kraftübertragung vom Reifen 11 auf die Straße simuliert und das Radmodell 21 simuliert die Dynamik mit der Trägheit des Fahrzeugrades und mit den Kräften / Momenten der Kraftübertragung.

Es kann hierfür ein auf den Reifen 11 bezogenes Koordinatensystem wie in Fig.3 dargestellt verwendet werden. Hierbei ist schematisch ein Reifen 11 eines Fahrzeugrades 19 auf einer im Allgemeinen gewölbten Fahrbahn 12 dargestellt. Der Reifen 11 steht am Radaufstandspunkt P auf der Fahrbahn 12 auf (Fig.13 zeigt die Tangentialebene 13 auf die gewölbte Fahrbahn 12 im Radaufstandspunkt P) und der Reifen 11 dreht sich um den Radmittelpunkt C um eine Drehachse $y_c$. Der Reifen 11 steht dabei nicht in einem Punkt P auf der Fahrbahn 12 auf, sondern auf einer Reifenaufstandsfläche, die gemeinhin als Latsch L bezeichnet wird. Die x-Achse entspricht der Spur des Reifens 11. Die y-Achse ist die Parallele der Drehachse $y_c$ durch den Radaufstandspunkt P und die z-Achse ist die Verbindungsgerade durch Radaufstandspunkt P und den Radmittelpunkt C. Der Radaufstandspunkt P ist somit jener Punkt der den Abstand zwischen gewölbter Fahrbahn 12 und Radmittelpunkt C minimiert. Damit ergeben sich am Reifen 11 gemäß dem gewählten Koordinatensystem eine Vertikalkraft $F_z$, eine Längskraft $F_x$ in Richtung der Spur und eine Querkraft $F_y$, ein Rollwiderstandsmoment $M_y$, ein Bohrmoment $M_z$ und ein Kippmoment $M_x$. Diese Kräfte und Momente werden zusammengefasst auch als Reifen-Kraftwinder bezeichnet. Die in einem fahrbahnfesten Koordinatensystem beobachtete Geschwindigkeit des Radaufstandspunktes P des Fahrzeugs wird mit V(P) bezeichnet. Die Projektion von V(P) auf die Spur wird Längsgeschwindigkeit des Fahrzeugs genannt und mit $v_x$ abgekürzt. In gleicher Weise ergibt sich eine Quergeschwindigkeit des Fahrzeugs in y-Richtung.

Das Radmodell 21 könnte dann beispielsweise als Bewegungsgleichung der Form

$$J_W \ddot{\alpha} = M_y + \underbrace{F_x r}_{M_{Fx}} + M_R \left[ + M_B + M_{aux} \right]$$

implementiert sein, mit den folgenden Größen:
Massenträgheitsmoment des simulierten Fahrzeugrades $J_W$, Drehbeschleunigung $\ddot{\alpha}$ mit dem Drehwinkel $\alpha$ (der gemessen werden kann, auch als analoge Größe wie der Drehzahl), Rollwiderstandsmoment $M_y$, Längskraft $F_x$, Radius des Fahrzeugrades r, ein an der Seitenwelle wirkendes Drehmoment $M_R$, das z.B. vom Antriebsaggregat 3 in den Antriebsstrang 2 eingeprägt wird, sowie weiteren optionalen Größen, wie einem Bremsmoment $M_B$ und beliebigen Zusatzmomenten $M_{aux}$, wie z.B. Reibmomente, Luftwiderstandsmoment, usw. Die Drehmomente sind als algebraische Größen gegebenenfalls vorzeichenbehaftet. Die mechanische Verbindung zwischen Belastungsmaschine 8a, 8b und Seitenwelle 7a, 7b wird in der Regel als, zumindest ausreichend, steif angesehen, sodass der Drehwinkel $\alpha$ meistens aus der gemessenen Ist-Drehzahl $n_{Ba,ist}$, $n_{Bb,ist}$ der Belastungsmaschine 8a, 8b abgeleitet werden kann. Die Größen Bremsmoment $M_B$ und Antriebsmoment $M_R$ werden entweder gemessen oder sind aus dem Prüflauf bekannt, oder werden aus anderen am Antriebsstrangprüfstand 1 gemessenen Größen berechnet oder in einem Beobachter geschätzt. Jedenfalls berücksichtigt das Radmodell 21 als Größe des Reifens 11 des simulierten Fahrzeugrades 19 ein Drehmoment $M_{Fx}$, das von einer Längskraft $F_X$ herrührt, die vom Reifen 11 aufgebracht wird, vorzugsweise als zusätzliche Reifengröße auch ein Rollwiderstandsmoment $M_y$.

Zumindest die Längskraft $F_X$ wird dabei im Reifenmodell 23 des Radmodells 21 berechnet, normalerweise aber auch noch zumindest das Rollwiderstandsmoment $M_y$ und oftmals auch die Querkraft $F_y$ und das Bohrmoment $M_z$, das versucht das eingelenkte Rad zurückzudrehen. Gemäß der aktuellen wirkenden Statik und Dynamik (Lage, Geschwindigkeit, Beschleunigung) des virtuellen Fahrzeugs, aber auch in Folge von implementierten Antriebskonzepten wie beispielsweise einer aktiven Drehmomentverteilung, müssen die wirkenden Reifenkräfte und Reifenmomente an den einzelnen Rädern des Fahrzeugs natürlich nicht gleich sein.

Für die Berechnung der benötigten Reifenkräfte und/der Reifenmomente kann ein beliebiges bekanntes Reifenmodell 23 verwendet werden. Bekannte Reifenmodelle sind beispielsweise ein Pacejka Modell, ein TameTire Modell, ein Ftire Modell, ein Delft-Tyre Modell oder ein MF-SWIFT Modell. Häufig wird das Pacejka Modell verwendet, das beispielsweis in Pacejky H. B., et al., "Tyre Modelling for Use in Vehicle Dynamics Studies", International Congress and Exposition, Detroit, Feb. 23-27, 1987, SAE Technical Paper 870421 beschrieben ist. Diese Reifenmodelle sind hinlänglich bekannt und werden daher nicht genauer beschrieben. Im Wesentlichen berechnet ein Reifenmodell zumindest einige der genannten auf einen Reifen wirkenden Reifenkräfte und/oder Reifenmomente. Welches Reifenmodell verwendet wird, ist für die Erfindung aber unerheblich. Ebenso kann im Radmodell 21 bzw. im Reifenmodell 23 der Längsschlupf und/oder der Querschlupf des Reifens 11 berücksichtigt werden, beispielsweise über einen bekannten Zusammenhang zwischen Längskraft $F_X$ und Querkraft $F_y$ und dem Längsschlupf und Querschlupf. Dieser Zusammenhang kann beispielsweise in Form eines Diagramms oder Kennfeldes, wie z.B. in EP 1 037 030 A2 beschrieben, hinterlegt sein.

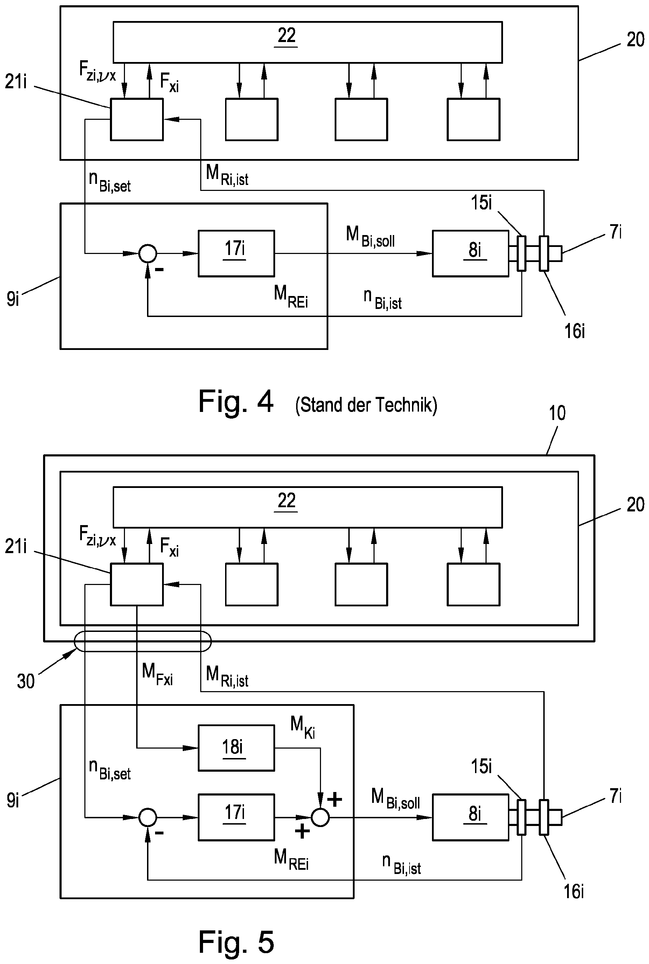

Die herkömmliche bekannte Regelung einer Belastungsmaschine 8i auf einem Antriebsstrangprüfstand 1, wie z.B. in der DE 38 01 647 C2 oder der AT 508 031 B1 beschrieben, ist in Fig.4 dargestellt. Die Beschreibung wird nachfolgend nur für eine Belastungsmaschine 8i als Simulation für das i-te simulierte Fahrzeugrad gemacht, was aber analog auch für die anderen am Antriebsstrangprüfstand 1 eingesetzten Belastungsmaschinen gilt. Im Fahrzeugmodell 22 wird beispielsweise aus den Längskräften $F_{Xi}$ an den angetriebenen Fahrzeugrädern und aus anderen bekannten oder parametrierten geometrischen oder kinematischen Einflussgrößen, wie beispielsweise der Fahrzeugmasse, der Fahrbahnsteigung, der Fahrbahnneigung, dem Schräglaufwinkel des i-ten Rades, den aktuell wirkenden Schlupf, dem Luftwiderstand, der Nick- und Wankbewegung des Fahrzeugs, der Fahrbahnbeschaffenheit, usw., die Zustandsgrößen des Fahrzeugs, insbesondere die Längsgeschwindigkeit $v_x$ des Fahrzeugs und meistens auch die Gierrate, berechnet. Im Fahrzeugmodell 22 werden aus der aktuellen wirkenden Statik (Gewichtskraft) und Dynamik (Lage, Geschwindigkeit, Beschleunigung im Raum) des simulierten Fahrzeugs auch die aktuellen Vertikalkräfte $F_{zi}$ als Reifenaufstandskräfte an den Fahrzeugrädern berechnet. Daraus kann zusammen mit einem Haftbeiwert zwischen Straße und Reifen die Längskraft $F_X$ an einem Rad berechnet werden, beispielsweise im Reifenmodell 23 des Radmodells 21. Im Radmodell 21i des i-ten Fahrzeugrades, bzw. im darin integrierten Reifenmodell 23i, wird gegebenenfalls auch ein Rollwiderstandsmoment $M_{yi}$ des i-ten Fahrzeugrades berechnet. Hierzu wird auch das Ist-Drehmoment $M_{Ri,ist}$ an der Seitenwelle 7i bestimmt (gemessen, geschätzt) und dem Radmodell 21i zur Verfügung gestellt. Zumindest aus der Längsgeschwindigkeit $v_x$ des simulierten Fahrzeugs und der Vertikalkraft $F_{zi}$, und gegebenenfalls einer Ist Drehzahl $n_{Bi,ist}$ des i-ten Fahrzeugrades, sowie dem Ist-Drehmoment $M_{Ri,ist}$ an der zugehörigen Seitenwelle 7i, und gegebenenfalls auch mit dem Rollmoment $M_{yi}$ und anderen Drehmomenten, wird die Längskraft $F_{Xi}$ berechnet, die wiederum dem Fahrzeugmodell 22 zur Verfügung gestellt wird. Hierfür stehen natürlich auch benötigte Parameter, wie beispielsweise ein aktueller Haftbeiwert zwischen Fahrtstrecke und Reifen 11 oder ein Schräglaufwinkel, zur Verfügung. Gleichfalls kann bei der Berechnung der Längskraft $F_{Xi}$, insbesondere für realitätsnahe und auch hochdynamische Prüfläufe, auch der Schlupf berücksichtigt werden. Aus der im aktuellen Zeitschritt der Simulation berechneten Längsgeschwindigkeit $v_x$ wird im Radmodell 21i die an der Seitenwelle 7i mit der Belastungsmaschine 8i einzustellende Soll-Drehzahl $n_{Bi,set}$ berechnet, die der zugeordneten Regelungseinheit 9i mit einem implementierten Drehzahlregler 17i als Sollwert der Regelung übergeben wird. Der Drehzahlregler 17i berechnet daraus gemäß dem implementierten Regler ein Regelmoment $M_{REi}$, das der Belastungsmaschine 8i als einzustellendes Drehmoment $M_{Bi,soll}$ übergeben wird. Diese Stellgröße für die Belastungsmaschine 8i wird in der Leistungselektronik (z.B. ein Umrichter) der Belastungsmaschine 8i in bekannter Weise in einen elektrischen Motorstrom umgerechnet. Der Drehzahlregler 17i ist beispielsweise als herkömmlicher Feedback-Regler ausgeführt, der einen Regelfehler als Abweichung zwischen einer (z.B. gemessenen) Ist-Drehzahl $n_{Bi,ist}$ der Seitenwelle 7i und der Soll-Drehzahl $n_{Bi,set}$ ausregelt.

Die erfindungsgemäße Drehzahlregelung einer Belastungsmaschine 8i wird nun mit Bezugnahme auf die Fig.5 erläutert. Gegenüber der herkömmlichen Regelung wie mit Fig.4 beschrieben, wird die Drehzahlregelung der Belastungsmaschine 8i erfindungsgemäß durch eine Trägheitsmomenten-Kompensation ergänzt. Durch die Trägheitsmomenten-Kompensation wird der Abweichung zwischen dem bekannten Trägheitsmoment $J_{Bi}$ der Belastungsmaschine 8i und dem bekannten Trägheitsmoment $J_{Ri}$ des virtuellen, simulierten Fahrzeugrades, Rechnung getragen. Anders ausgedrückt wird damit die Abweichung zwischen der Simulation und der Realität am Antriebsstrangprüfstand 1 berücksichtigt und dessen Einfluss reduziert.

Das Radmodell 21i übergibt hierfür an der Schnittstelle 30 der Prüfstandautomatisierungseinheit 10 an die Regelungseinheit 9i neben der Soll-Drehzahl $n_{Bi,set}$, wie im Stand der Technik, zusätzlich auch ein Drehmoment $M_{Fxi}$, das von der Längskraft $F_{Xi}$ hervorgerufen wird.

Äquivalent dazu könnte natürlich auch die Längskraft $F_{Xi}$, gegebenenfalls auch mit dem Radius des Fahrzeugrades $r_i$, übergeben werden. Das wird daher im Sinne der Erfindung auch als "Übergeben des Drehmoment $M_{Fxi}$" verstanden. Nachdem dieses Drehmoment $M_{Fxi}$ für die Durchführung des Prüflaufs ohnehin im Radmodell 21i berechnet werden muss, ist es nicht erforderlich, das Radmodell 21i zu adaptieren. Es ist lediglich die Übergabe einer zusätzlichen Größe zwischen dem Simulationsmodell 20 und der Regelungseinheit 9i vorzusehen, beispielsweise eine zusätzliche Schnittstelle an der Prüfstandautomatisierungseinheit 10 zur Übergabe des Drehmomentes $M_{Fxi}$, was einfach zu implementieren ist.

In der Regelungseinheit 9i ist eine Kompensationseinheit 18i vorgesehen, die aus dem Drehmoment $M_{Fxi}$ und einer Abweichung $A_{Ji}$ zwischen einem Trägheitsmoment $J_{Bi}$ der Belastungsmaschine und einem Trägheitsmoment $J_{Ri}$ des simulierten Fahrzeugrades ein Kompensationsdrehmoment $M_{Ki}$ berechnet, also $M_{Ki} = f(M_{Fxi}, A_{Ji})$. Das berechnete Kompensationsdrehmoment $M_{Ki}$ wird vorzugsweise in jeden Zeitschritt der Regelung neu berechnet. Dieses Kompensationsdrehmoment $M_{Ki}$ wird zum Drehmoment $M_{REi}$ addiert, das im Drehzahlregler 17i der Regelungseinheit 9i gemäß des implementierten Reglergesetzes (z.B. ein herkömmlicher PI- oder PID-Regler) berechnet wird. Dieses Summendrehmoment wird dann der Belastungsmaschine 8i als einzustellendes Drehmoment $M_{Bi,soll}$ vorgegeben.

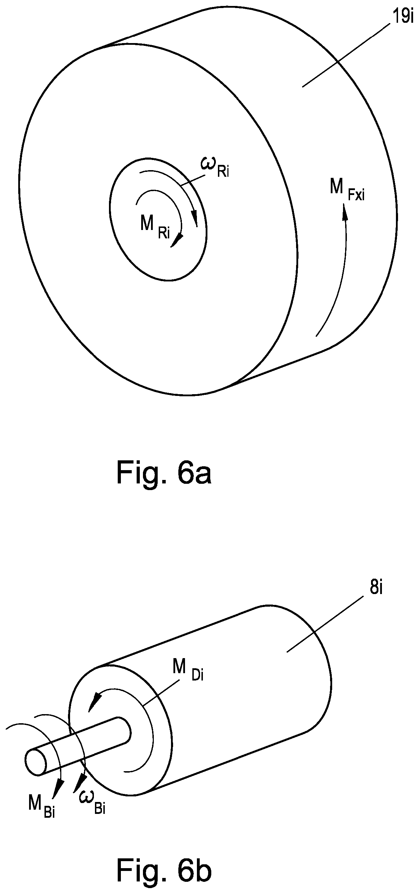

Zur Ermittlung der Abweichung $A_{Ji}$ für das i-te Fahrzeugrad 19i kann wie folgt vorgegangen werden, wobei auf Fig.6 Bezug genommen wird. An einem Fahrzeugrad 19i mit Trägheitsmoment $J_{Ri}$, das sich mit der Winkelgeschwindigkeit $\omega_{Ri}$ dreht, wirken das Drehmoment $M_{Fxi}$, das von der Längskraft $F_{Xi}$ hervorgerufen wird, und das an der Seitenwelle 7i wirkende Drehmoment $M_{Ri}$ (Fig.6a). Schreibt man den Drallsatz hierfür an erhält man $J_{Ri}\dot{\omega}_{Ri} = M_{Ri} - M_{Fxi}$. An der Welle der Belastungsmaschine 8i, die sich mit der Winkelgeschwindigkeit $\omega_{Bi}$ dreht, wirkt ein Belastungsdrehmoment $M_{Bi}$ (Fig.1) und die Belastungsmaschine 8i bringt das Drehmoment $M_{Di}$ auf (Fig.6b). Schreibt man den Drallsatz hierfür an erhält man $J_{Bi}\dot{\omega}_{Bi} = M_{Bi} - M_{Di}$. Die Belastungsmaschine 8i soll nun am Antriebsstrangprüfstand 1 das Fahrzeugrad 19i möglichst gut nachbilden. Man kann daher fordern, dass die Drehbeschleunigungen an der Seitenwelle 7i und an der Welle der Belastungsmaschine 8i gleich sind, also $\dot{\omega}_{Ri} = \dot{\omega}_{Bi}$, woraus sich aus den beiden Drallsätzen unmittelbar ableiten lässt

$$M_{Di} = \frac{J_{Bi}}{J_{Ri}} M_{Fxi} + M_{Ri} - \frac{J_{Bi}}{J_{Ri}} M_{Bi} .$$

Unter der Annahme einer (zumindest ausreichend) hohen mechanischen Steifigkeit der mechanischen Anbindung der Belastungsmaschine 8i an den Antriebsstrang 2, kann das an der Seitenwelle 7i wirkende Drehmoment $M_{Ri}$ zur Vereinfachung mit dem Drehmoment $M_{Bi}$ der Belastungsmaschine 8i gleichgesetzt werden, was zu

$$M_{Di} = \frac{J_{Bi}}{J_{Ri}} M_{Fxi} + \left( 1 - \frac{J_{Bi}}{J_{Ri}} \right) M_{Ri}$$

führt. Es muss daher nur eines der beiden Drehmomente am Antriebsstrangprüfstand 1 ermittelt werden. Damit stellt sich die Abweichung $A_{Ji}$ als Quotient aus dem Trägheitsmoment $J_{Bi}$ der Belastungsmaschine 8i und dem Trägheitsmoment $J_{Ri}$ des simulierten Fahrzeugrades 19i dar. Alternativ kann man auch fordern $M_{Bi} = M_{Ri}$, woraus sich aus den beiden Drallsätzen unmittelbar ableiten lässt

$$M_{Di} = M_{Fxi} + J_{Ri}\dot{\omega}_{Ri} - J_{Bi}\dot{\omega}_{Bi} .$$

Unter der Annahme einer (zumindest ausreichend) hohen mechanischen Steifigkeit der mechanischen Anbindung der Belastungsmaschine 8i an den Antriebsstrang 2, kann die Drehzahl $n_{Ri}$ (bzw. $\omega_{Ri}$) an der Seitenwelle 7i zur Vereinfachung mit der Drehzahl $n_{Bi}$ (bzw. $\omega_{Bi}$) der Belastungsmaschine 8i gleichgesetzt werden, was zu

$$M_{Di} = M_{Fxi} + \left( J_{Ri} - J_{Bi} \right) \dot{\omega}_{Ri}$$

Führt. Es muss daher nur eine der beiden Drehzahlen am Antriebsstrangprüfstand 1 ermittelt werden. Damit stellt sich die Abweichung $A_{Ji}$ als Differenz aus dem Trägheitsmoment $J_{Ri}$ des simulierten Fahrzeugrades 19i und dem Trägheitsmoment $J_{Bis}$ der Belastungsmaschine 8i dar. Sind die Trägheitsmomente $J_{Bi}$, $J_{Ri}$ gleich reduzieren sich die Gleichungen auf $M_{Di} = M_{Fxi}$. Die Drehmomente $M_{Bi}$ und/oder $M_{Ri}$ oder die Drehzahlen $n_{Bi}$ und/oder $n_{Ri}$ an können wiederum gemessen, berechnet oder geschätzt werden und können daher für die Trägheitsmomenten-Kompensation als bekannt vorausgesetzt werden.

Damit die Belastungsmaschine 8i das Fahrzeugrad 19i trotz unterschiedlicher Trägheitsmomente $J_{Ri}$, $J_{Bi}$ gut nachbildet, müsste die Belastungsmaschine 8i daher das Drehmoment $M_{Di}$ aufbringen. Das Kompensationsdrehmoment $M_{Ki}$ wird daher diesem Drehmoment $M_{Di}$ gleichgesetzt. Das Kompensationsdrehmoment $M_{Ki}$ kann daher auch als Führungsgröße gesehen werden, wobei der Drehzahlregler 17i dann nur mehr allfällige Abweichungen ausregeln muss. Die Anforderungen an den Drehzahlregler 17i, beispielsweise an die Verstärkung, können damit ebenfalls reduziert werden und gleichzeitig kann damit die Dynamik des Drehzahlreglers 17i (im Sinne einer Änderungsrate der Stellgröße) und die Geschwindigkeit verbessert werden. Ebenfalls kann damit die Stabilität des Drehzahlreglers 17i erhöht werden.

Im oben angeschriebenen Drallsatz für das Fahrzeugrad 19i könnten natürlich auch noch andere Reifengrößen, insbesondere ein Rollwiderstandsmoment $M_{yi}$, berücksichtigt werden.

Das würde weitere Schnittstellen zwischen dem Simulationsmodell 20 und der Regelungseinheit 9 erforderlich machen.

Für die Erfindung ist es unerheblich, wie der Antriebsstrang 2 am Antriebsstrangprüfstand 1 angeordnet ist. Es könnte auch das ganze reale Fahrzeug am Antriebsstrangprüfstand 1 angeordnet sein und nur die Fahrzeugräder, zumindest die angetriebenen, durch Belastungsmaschinen 8i ersetzt sein. Ebenso könnte das reale Fahrzeug mit Fahrzeugrädern auf einer Rolle am Antriebsstrangprüfstand 1 angeordnet sein. Die Belastungsmaschine 8i würde die Rolle antreiben und damit indirekt auf den Antriebsstrang 2 einwirken bzw. wäre die Belastungsmaschine 8i dadurch indirekt mit einer Seitenwelle verbunden. Auch könnten mehrere Rollen vorgesehen sein, beispielsweise eine Rolle pro angetriebenes Fahrzeugrad oder pro Achse. Mit einem solchen Rollenprüfstand könnten dann allerdings in der Regel keine Prüfläufe mit hoher Dynamik durchgeführt werden.

**Patentansprüche**

1. Verfahren zum Durchführen eines Prüflaufs auf einem Antriebsstrangprüfstand (1) auf dem ein Antriebsstrang (2) mit zumindest einer Seitenwelle (7i) angeordnet wird und diese Seitenwelle (7i) mit einer Belastungsmaschine (8i) verbunden wird und die Drehzahl der Seitenwelle (7i) in einer Regelungseinheit (9i) geregelt wird, wobei in einem Simulationsmodell (20) eine Längskraft ($F_{Xi}$) eines mit dem Simulationsmodell (20) simulierten Reifen (11) eines Fahrzeugrades (19) und eine einzustellende Soll-Drehzahl ($n_{Bi,set}$) der Belastungsmaschine (8i) berechnet wird und die Soll-Drehzahl ($n_{Bi,set}$) der Regelungseinheit (9i) als Sollwert der Drehzahlregelung der Belastungsmaschine (9i) übergeben wird, wobei in der Regelungseinheit (9i) ein Kompensationsdrehmoment ($M_{Ki}$) berechnet wird und die Regelungseinheit (9i) mit einem Drehzahlregler (17i) aus der Soll-Drehzahl ($n_{Bi,set}$) ein Drehmoment ($M_{REi}$) berechnet und ein mit der Belastungsmaschine (8i) einzustellendes Drehmoment ($M_{Bi,soll}$) als Summe aus dem Kompensationsdrehmoment ($M_{Ki}$) und des vom Drehzahlregler (17i) berechneten Drehmomentes ($M_{REi}$) berechnet wird und von der Belastungsmaschine (8i) eingestellt wird, **dadurch gekennzeichnet, dass** das in der Simulationsmodell (20) berechnete, von der Längskraft ($F_{Xi}$) hervorgerufene Drehmoment ($M_{Fxi}$) der Regelungseinheit (9i) zusätzlich übergeben wird, und daraus in der Regelungseinheit (9i) das Kompensationsdrehmoment ($M_{Ki}$) als Funktion des von der Längskraft ($F_{Xi}$) hervorgerufenen Drehmoments ($M_{Fxi}$) und einer Abweichung ($A_{Ji}$) zwischen einem Trägheitsmoment ($J_{Bi}$) der Belastungsmaschine (8i) und einem Trägheitsmoment ($J_{Ri}$) des simulierten Fahrzeugrades (19) berechnet wird, wobei das Kompensationsdrehmoment ($M_{Ki}$) aus der Beziehung

$$M_{Ki} = \frac{J_{Bi}}{J_{Ri}} M_{Fxi} + M_{Ri} - \frac{J_{Bi}}{J_{Ri}} M_{Bi} \qquad \text{oder}$$

$$M_{Ki} = \frac{J_{Bi}}{J_{Ri}} M_{Fxi} + \left(1 - \frac{J_{Bi}}{J_{Ri}}\right) M_{Ri} \qquad \text{berechnet}$$

wird, mit einem an der Seitenwelle (7i) wirkenden Drehmoment ($M_{Ri}$) und einem Drehmoment ($M_{Bi}$) an der Welle der Belastungsmaschine (8i), oder das Kompensationsdrehmoment ($M_{Ki}$) aus der Beziehung $M_{Ki} = M_{Fxi} + J_{Ri}\dot{\omega}_{Ri} - J_{Bi}\dot{\omega}_{Bi}$ oder $M_{Ki} = M_{Fxi} + (J_{Ri} - J_{Bi})\dot{\omega}_{Ri}$ berechnet wird, mit einer an der Seitenwelle (7i) wirkenden Drehbeschleunigung ($\dot{\omega}_{Ri}$) und einer an der Welle der Belastungsmaschine (8i) wirkenden Drehbeschleunigung ($\dot{\omega}_{Bi}$).

2. Verfahren nach Anspruch 1, **dadurch gekennzeichnet, dass** das Simulationsmodell (20) ein Radmodell (21i) mit einem Reifenmodell (23i) und ein Fahrzeugmodell (22) umfasst, wobei das Fahrzeugmodell (22) eine Längsgeschwindigkeit ($v_X$) des simulierten Fahrzeugs und eine Vertikalkraft ($F_{Zi}$) des Fahrzeugrades (19) berechnet und dem Radmodell (21i) übergibt und das Radmodell (21i) mit dem Reifenmodell (23i) die Längskraft ($F_{Xi}$) berechnet und dem Fahrzeugmodell (22) übergibt.

3. Antriebsstrangprüfstand mit einem Antriebsstrang (2) eines Fahrzeugs als Prüfling, wobei der Antriebsstrang (2) auf dem Antriebsstrangprüfstand (1) einem Prüflauf unterworfen wird, wobei zumindest eine Seitenwelle (7i) des Antriebsstranges (2) mit einer Belastungsmaschine (8i) verbunden ist und eine Regelungseinheit (9i) vorgesehen ist, um die Drehzahl der Seitenwelle (7i) gemäß den Vorgaben des Prüflaufs zu regeln, und wobei am Antriebsstrangprüfstand (1) ein Simulationsmodell (20) zum Simulieren eines Fahrzeugrades (19) des Fahrzeugs implementiert ist, das eine Längskraft ($F_{Xi}$) des Reifens (11) des Fahrzeugrades (19) und eine einzustellende Soll-Drehzahl ($n_{Bi,set}$) der Belastungsmaschine (8i) berechnet, wobei in der Regelungseinheit (9i) eine Kompensationseinheit (18i) vorgesehen ist, die ein Kompensationsdrehmoment ($M_{Ki}$) berechnet, und in der Regelungseinheit (9i) ein Drehzahlregler (17i) implementiert ist, der aus der Soll-Drehzahl ($n_{Bi,set}$) ein Drehmoment ($M_{REi}$) berechnet und die Belastungsmaschine (8i) die Summe des Kompensationsdrehmoments ($M_{Ki}$) und des vom Drehzahlregler (17i) berechneten Drehmomentes ($M_{REi}$) am Antriebsstrangprüfstand (1) einstellt, **dadurch gekennzeichnet, dass** die Kompensationseinheit (18i) aus dem von der Längskraft ($F_{Xi}$) hervorgerufenen Drehmoment ($M_{Fxi}$) und einer Abweichung ($A_{Ji}$) zwischen einem Trägheitsmoment ($J_{Bi}$) der Belastungsmaschine (8i) und einem Trägheitsmoment ($J_{Ri}$) des simulierten Fahrzeugrades (19) das Kompensationsdrehmoment ($M_{Ki}$) berechnet, wobei die Kompensationseinheit (18i) das Kompensationsdrehmoment ($M_{Ki}$) aus der Beziehung

$$M_{Di} = \frac{J_{Bi}}{J_{Ri}}M_{Fxi} + M_{Ri} - \frac{J_{Bi}}{J_{Ri}}M_{Bi} \quad \text{oder}$$

$$M_{Di} = \frac{J_{Bi}}{J_{Ri}}M_{Fxi} + \left(1 - \frac{J_{Bi}}{J_{Ri}}\right)M_{Ri}$$

berechnet, mit einem an der Seitenwelle (7i) wirkenden Drehmoment ($M_{Ri}$) und einem Drehmoment ($M_{Bi}$) an der Welle der Belastungsmaschine (8i), oder die Kompensationseinheit (18i) das Kompensationsdrehmoment ($M_{Ki}$) aus der Beziehung $M_{Di} = M_{Fxi} + J_{Ri}\dot\omega_{Ri} - J_{Bi}\dot\omega_{Bi}$ oder $M_{Di} = M_{Fxi} + (J_{Ri} - J_{Bi})\dot\omega_{Ri}$ berechnet, mit einer an der Seitenwelle (7i) wirkenden Drehbeschleunigung ($\dot\omega_{Ri}$) und einer an der Welle der Belastungsmaschine (8i) wirkenden Drehbeschleunigung ($\dot\omega_{Bi}$).

**Claims**

1. A method for carrying out a test run on a drive train test stand (1) on which a drive train (2) with at least one side shaft (7i) is arranged and this side shaft (7i) is connected to a dynamometer (8i) and the speed of the side shaft (7i) is regulated in a control unit (9i), wherein in a simulation model (20) a longitudinal force ($F_{Xi}$) of a tire (11) of a vehicle wheel (19) simulated with the simulation model (20) and a setpoint speed ($n_{Bi,set}$) of the dynamometer (8i) to be set is calculated and the setpoint speed ($n_{Bi,set}$) is transferred to the control unit (9i) as a setpoint value of the speed control of the dynamometer (9i), wherein a compensation torque ($M_{Ki}$) is calculated in the control unit (9i) and the control unit (9i) calculates a torque ($M_{REi}$) from the setpoint speed ($n_{Bi,\,set}$) with a speed controller (17i) and a torque ($M_{Bi,soll}$) to be set with the dynamometer (8i) is calculated as the sum of the compensation torque ($M_{Ki}$) and the torque ($M_{REi}$) calculated by the speed controller (17i) and set by the dynamometer (8i), **characterized in that** the torque ($M_{Fxi}$) caused by the longitudinal force ($F_{Xi}$) and calculated in the simulation model (20) is also transferred to the control unit (9i), and therefrom the compensation torque ($M_{Ki}$) is calculated in the control unit (9i) as a function of the torque ($M_{Fxi}$) caused by the longitudinal force ($F_{Xi}$) and a deviation ($A_{Ji}$) between a moment of inertia ($J_{Bi}$) of the dynamometer (8i) and a moment of inertia ($J_{Ri}$) of the simulated vehicle wheel (19), wherein the compensation torque ($M_{Ki}$) is calculated from the relationship

$$M_{Ki} = \frac{J_{Bi}}{J_{Ri}}M_{Fxi} + M_{Ri} - \frac{J_{Bi}}{J_{Ri}}M_{Bi} \quad \text{or}$$

$$M_{Ki} = \frac{J_{Bi}}{J_{Ri}}M_{Fxi} + \left(1 - \frac{J_{Bi}}{J_{Ri}}\right)M_{Ri},$$

with a torque ($M_{Ri}$) acting on the side shaft (7i) and a torque ($M_{Bi}$) acting on the shaft of the dynamometer (8i), or the compensation torque ($M_{Ki}$) is calculated from the relationship $M_{Ki} = M_{Fxi} + J_{Ri}\dot\omega_{Ri} - J_{Bi}\dot\omega_{Bi}$ or $M_{Ki} = M_{Fxi} + (J_{Ri} - J_{Bi})\dot\omega_{Ri}$, with an angular acceleration ($\dot\omega_{Ri}$) acting on the side shaft (7i) and an angular acceleration acting ($\dot\omega_{Bi}$) on the shaft of the dynamometer (8i).

2. The method of claim 1, **characterized in that** the simulation model (20) comprises a wheel model (21i) having a tire model (23i) and a vehicle model (22), wherein the vehicle model (22) calculates a longitudinal velocity ($v_X$) of the simulated vehicle and a vertical force ($F_{Zi}$) of the vehicle wheel (19) and transfers them to the wheel model (21i) and the wheel model (21i) having the tire model (23i) calculates the longitudinal force ($F_{Xi}$) and transfers it to the vehicle model (22).

3. A drive train test stand with a drive train (2) of a vehicle as a test specimen, wherein the drive train (2) on the drive train test stand (1) is subjected to a test run, wherein at least one side shaft (7i) of the drive train (2) is connected with a dynamometer (8i) and a control unit (9i) is provided to control the speed of the side shaft (7i) in accordance with the specifications of the test run, and wherein a simulation model (20) for simulating a vehicle wheel (19) of the vehicle is implemented on the drive train test stand (1) that calculates a longitudinal force ($F_{Xi}$) of the tire (11) of the vehicle wheel (19) and a setpoint speed ($n_{Bi,set}$) of the dynamometer (8i) to be set, wherein in the control unit (9i) a compensation unit (18i) is provided that calculates a compensation torque ($M_{Ki}$), and a speed controller (17i) is implemented in the control unit (9i), which calculates a torque ($M_{REi}$) from the setpoint speed ($n_{Bi,set}$) and the dynamometer (8i) sets the sum of the compensation torque ($M_{Ki}$) and the torque ($M_{REi}$) calculated by the speed controller ($17_i$) on the drive train dynamometer (1), **characterized in that** the compensation unit (18i) calculates the compensation torque ($M_{Ki}$) from a torque ($M_{Fxi}$) caused by the longitudinal force ($F_{Xi}$) and a deviation ($A_{Ji}$) between a moment of inertia ($J_{Bi}$) of the dynamometer (8i) and a moment of inertia ($J_{Ri}$) of the simulated vehicle wheel (19), wherein the compensation unit (18i) calculates the compensation torque ($M_{Ki}$) from the relationship

$$M_{Ki} = \frac{J_{Bi}}{J_{Ri}} M_{Fxi} + M_{Ri} - \frac{J_{Bi}}{J_{Ri}} M_{Bi}$$

or

$$M_{Ki} = \frac{J_{Bi}}{J_{Ri}} M_{Fxi} + \left(1 - \frac{J_{Bi}}{J_{Ri}}\right) M_{Ri},$$

with a torque ($M_{Ri}$) acting on the side shaft (7i) and a torque ($M_{Bi}$) acting on the shaft of the dynamometer (8i), or the compensation unit (18i) calculates the compensation torque ($M_{Ki}$) from the relationship $M_{Ki} = M_{Fxi} + J_{Ri}\dot{\omega}_{Ri} - J_{Bi}\dot{\omega}_{Bi}$ or $M_{Ki} = M_{Fxi} + (J_{Ri} - J_{Bi})\dot{\omega}_{Ri}$, with an angular acceleration ($\dot{\omega}_{Ri}$) acting on the side shaft (7i) and an angular acceleration ($\dot{\omega}_{Bi}$) acting on the shaft of the dynamometer (8i).

**Revendications**

1. Procédé de réalisation d'un cycle d'essai sur un banc d'essai de chaîne cinématique (1) sur lequel une chaîne cinématique (2) comportant au moins un arbre latéral (7i) est disposée et ledit arbre latéral (7i) est relié à une machine de chargement (8i) et la vitesse de rotation de l'arbre latéral (7i) est réglée dans une unité de régulation (9i), dans un modèle de simulation (20), une force longitudinale ($F_{Xi}$) d'un pneu (11) d'une roue de véhicule (19) simulée à l'aide du modèle de simulation (20) et une vitesse de rotation de consigne ($n_{Bi,set}$) à régler de la machine de chargement (8i) étant calculée et la vitesse de rotation de consigne ($n_{Bi,set}$) de l'unité de régulation (9i) étant transférée comme valeur de consigne de la régulation de vitesse de rotation de la machine de chargement (9i), un couple de compensation ($M_{Ki}$) étant calculé dans l'unité de régulation (9i) et l'unité de régulation (9i) dotée d'un régulateur de vitesse de rotation (17i) calculant un couple ($M_{REi}$) à partir de la vitesse de rotation de consigne ($n_{Bi,set}$) et un couple ($M_{Bi,soll}$) à régler à l'aide de la machine de chargement (8i) étant calculé comme somme du couple de compensation($M_{Ki}$) et du couple ($M_{REi}$) calculé par le régulateur de vitesse de rotation ($17_i$) et réglé par la machine de chargement (8i), **caractérisé en ce que** le couple ($M_{Fxi}$) calculé dans le modèle de simulation (20) et amené par la force longitudinale ($F_{Xi}$) est également transféré à l'unité de régulation (9i), et à partir de là, le couple de compensation ($M_{Ki}$) dans l'unité de régulation (9i) est calculé en fonction du couple ($M_{Fxi}$) amené par la force longitudinale ($F_{Xi}$) et d'un écart ($A_{Ji}$) entre un moment d'inertie($J_{Bi}$) de la machine de chargement (8i) et un moment d'inertie ($J_{Ei}$) de la roue de véhicule (19) simulée, le couple de compensation ($M_{Ki}$) étant calculé à partir de la relation $M_{Ki} = \frac{J_{Bi}}{J_{Ri}} M_{Fxi} + M_{Ri} - \frac{J_{Bi}}{J_{Ri}} M_{Bi}$ ou

$M_{Ki} = \frac{J_{Bi}}{J_{Ri}} M_{Fxi} + \left(1 - \frac{J_{Bi}}{J_{Ri}}\right) M_{Ri},$ avec un couple ($M_{Ri}$) agissant sur l'arbre latéral (7i) et un couple ($M_{Bi}$) au niveau de l'arbre de la machine de chargement (8i), ou le couple de compensation ($M_{Ki}$) étant calculé à partir de la relation $M_{Ki} = M_{Fxi} + J_{Ri}\dot{\omega}_{Ri} - J_{Ri}\dot{\omega}_{Ri}$ ou $M_{Ki} = M_{Fxi} + (J_{Ri} - J_{Bi})\dot{\omega}_{Ri}$, avec une accélération de rotation ($\dot{\omega}_{Ri}$) agissant sur l'arbre latéral (7i) et une accélération de rotation ($\dot{\omega}_{Bi}$) agissant sur l'arbre de la machine de chargement (8i).

2. Procédé selon la revendication 1, **caractérisé en ce que** le modèle de simulation (20) comprend un modèle de roue (21i) comportant un modèle de pneu (23i) et un modèle de véhicule (22), le modèle de véhicule (22) calculant une vitesse longitudinale (vx) du véhicule simulé et une force verticale ($F_{Zi}$) de la roue de véhicule (19) et transférant celles-ci au modèle de roue (21i) et le modèle de roue (21i) comportant le modèle de pneu (23i) calculant la force longitudinale ($F_{Xi}$) et la transférant au modèle de véhicule (22).

3. Banc d'essai de chaîne cinématique comportant une chaîne cinématique (2) d'un véhicule comme échantillon, la chaîne cinématique (2) étant soumise à un cycle d'essai sur le banc d'essai de chaîne cinématique (1), au moins un arbre latéral (7i) de la chaîne cinématique (2) étant relié à une machine de chargement (8i) et une unité de régulation (9i) étant prévue pour régler la vitesse de rotation de l'arbre latéral (7i) selon les spécifications du cycle d'essai, et un modèle de simulation (20) destiné à la simulation d'une roue (19) du véhicule étant implémenté au niveau du banc d'essai de chaîne cinématique (1), lequel modèle de simulation calcule une force longitudinale ($F_{Xi}$) du pneu (11) de la roue de véhicule (19) et une vitesse de rotation de consigne ($n_{Bi,set}$) de la machine de chargement (8i) à régler, une unité de compensation (18i) étant prévue dans l'unité de régulation (9i), laquelle unité de compensation calcule un couple de compensation ($M_{Ki}$), et un régulateur de vitesse de rotation de consigne (17i) étant implémenté dans l'unité de régulation (9i), lequel régulateur de vitesse de rotation calcule un couple ($M_{REi}$) à partir de la vitesse de rotation de consigne ($n_{Bi,set}$) et la machine de charge (8i) règle la somme du couple de compensation ($M_{Ki}$) et du couple ($M_{REi}$) calculé par le régulateur de vitesse de rotation (17i) au niveau du banc d'essai de chaîne cinématique (1), **caractérisé en ce que** l'unité de compensation (18i) calcule le couple de compensation ($M_{Ki}$) à partir du couple ($M_{Fxi}$) amené par la force longitudinale ($F_{Xi}$) et d'un écart ($A_{ji}$) entre un moment d'inertie ($J_{Bi}$) de la machine de chargement (8i) et un moment d'inertie ($J_{Ri}$) de la roue de véhicule (19) simulée, l'unité de compensation (18i) calculant le couple de compensation ($M_{Ki}$) à partir de la relation

$$M_{Di} = \frac{J_{Bi}}{J_{Ri}} M_{Fxi} + M_{Ri} - \frac{J_{Bi}}{J_{Ri}} M_{Bi} \qquad \text{ou}$$

$$M_{Di} = \frac{J_{Bi}}{J_{Ri}} M_{Fxi} + \left(1 - \frac{J_{Bi}}{J_{Ri}}\right) M_{Ri},$$ avec un couple ($M_{Ri}$) agissant sur l'arbre latéral (7i) et un couple ($M_{Bi}$) sur l'arbre de la machine de chargement (8i), ou l'unité de compensation (18i) calculant le couple de compensation ($M_{Ki}$) à partir de la relation $M_{Di} = M_{Fxi} + J_{Ri}\dot{\omega}_{Ri} - J_{Bi}\dot{\omega}_{Bi}$ ou $M_{Di} = M_{Fxi} + (J_{Ri} - J_{Bi})\dot{\omega}_{Ri}$ avec une accélération de rotation ($\dot{\omega}_{Ri}$) agissant sur l'arbre latéral (7i) et une accélération de rotation ($\dot{\omega}_{Bi}$) agissant sur l'arbre de la machine de chargement (8i).

Fig. 1

Fig. 2

Fig. 3

**Fig. 4** (Stand der Technik)

**Fig. 5**

## Fig. 6a

## Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1037030 A2
- DE 3801647 C2
- AT 508031 B1
- US 2015219529 A1

**In der Beschreibung aufgeführte Nicht-Patentliteratur**

- **IN BAUER, R.** Neues Regelkonzept für die dynamische Antriebsstrangprüfung. *17. Steirisches Seminar über Regelungstechnik und Prozessautomatisierung vom 5. - 8.9.2011, Tagungsband,* 08. September 2011, 104-116
- **PACEJKY H. B. et al.** Tyre Modelling for Use in Vehicle Dynamics Studies. *International Congress and Exposition,* 23. Februar 1987